# EUROPÄISCHE PATENTANMELDUNG

(11) **EP 1 873 736 A1**
(43) Veröffentlichungstag der Anmeldung: **02.01.2008**
(21) Anmeldenummer: 07108803.3
(22) Anmeldetag: 24.05.2007
(51) Int. Cl.: G08G 1/16, G08G 1/0967

(54) **Verfahren und System zur Unterstützung des Fahrers eines Kraftfahrzeugs bei der Erkennung von Bodenschwellen**

(30) Priorität: 30.06.2006 DE 102006030178
(71) Anmelder: ROBERT BOSCH GMBH, 70442 Stuttgart (DE)
(72) Erfinder: Haug, Karsten, 70372 Stuttgart (DE)

(57) **Zusammenfassung**

Die vorliegende Erfindung betrifft ein Verfahren zur Unterstützung des Fahrers eines Fahrzeugs (1) bei der Erkennung von Hindernissen für das Fahrzeug (1), wobei außerhalb des Fahrzeugs (1) befindliche Objekte mittels Objekterfassungsmitteln (3) erfasst werden und bei erfassten Objekten eine Information (7, 8, 9) an den Fahrer und/oder an bestimmte Komponenten (10) des Fahrzeugs (1) gegeben wird, wobei mittels einer Auswertungseinheit (5) ermittelt wird, ob ein erfasstes Objekt eine Bodenschwelle (4) ist, und wobei eine Information (7, 8, 9) an den Fahrer und/oder an Komponenten (10) des Fahrzeugs (1) nur dann gegeben wird, wenn ein erfasstes Objekt eine Bodenschwelle (4) ist. Die Erfindung betrifft ferner ein System, das zur Durchführung des erfindungsgemäßen Verfahrens geeignet ist.

## Beschreibung

### Stand der Technik

Die vorliegende Erfindung betrifft ein Verfahren zur Unterstützung des Fahrers eines Fahrzeugs bei der Erkennung von Hindernissen für das Fahrzeug, wobei außerhalb des Fahrzeugs befindliche Objekte mittels Objekterfassungsmitteln erfasst werden, und bei erfassten Objekten Informationen an den Fahrer und/oder an bestimmte Komponenten des Fahrzeugs gegeben werden.

Derartige Verfahren sind im Rahmen von Fahrerassistenzsystemen bei Kraftfahrzeugen bekannt. Sie sollen den Fahrer beim Führen des Fahrzeugs unterstützen, indem er zusätzlich zu seiner eigenen Wahrnehmung auf mögliche Hindernisse für das Fahrzeug hingewiesen und insbesondere vor drohenden Gefahren oder Kollisionen gewarnt wird.

So ist aus der DE 103 59 413 A1 ein System sowie ein Verfahren zur Kollisionswarnung in Kraftfahrzeugen bekannt, bei dem außerhalb des Fahrzeugs befindliche Objekte erfasst und in einer Anzeigeeinheit angezeigt werden.

Zu möglichen Hindernissen für ein Fahrzeug gehören auch Bodenschwellen, die als Schikane gezielt in die Fahrbahn eingebaut werden, um den Fahrer zu einer Reduzierung der Fahrgeschwindigkeit zu bewegen. Derartige Bodenschwellen, die auch als Speed-Humps bezeichnet werden, können beispielsweise als sinusförmige Wellen oder Hubbel, aber auch mit vorderen und hinteren Rampen ausgebildet sein und unterschiedliche Höhe haben. Sie zwingen den Fahrer zu einer niedrigen Überfahrgeschwindigkeit, um Erschütterungen des Fahrzeugs und der Insassen zu minimieren und Beschädigungen des Fahrzeugs, insbesondere der Stoßdämpfer zu vermeiden. Üblicherweise werden solche Bodenschwellen in Spielstraßen, Wohngebieten oder in einigen Staaten, beispielsweise in Mexiko, Indien oder der Türkei auch an Ortseingängen eingesetzt, um eine zu schnelle Fahrt im Bereich der Bodenschwelle zu verhindern, und den Fahrer daran zu erinnern, dass er auch in dem nachfolgenden Gebiet die Geschwindigkeit kontrollieren und ggf. anpassen soll.

Dennoch kann es dazu kommen, dass ein Fahrer eine Bodenschwelle insbesondere in komplexen Fahrsituationen übersieht. Vor allem bei der innerörtlichen Orientierung in fremden Städten sowie aufgrund allgemeiner Ablenkungsquellen wie beispielsweise Beifahrer oder auch bei Müdigkeit des Fahrers besteht die Gefahr, dass eine Bodenschwelle nicht rechtzeitig oder überhaupt nicht wahrgenommen und mit zu hoher Geschwindigkeit überfahren wird. Auch nachts oder bei schlechten Sichtverhältnissen besteht ein erhöhtes Risiko, dass eine Bodenschwelle vom Fahrer nicht erkannt wird, zumal ggf. aufgebrachte Farbmarkierungen, etwa weiße Zackenlinien, im Laufe der Zeit verblassen und die gewünschte Warnfunktion nicht mehr hinreichend ausführen können.

Neben der hierdurch verursachten starken Erschütterung des Fahrzeugs und der Mitfahrer kann es auch zu Beschädigungen von Fahrwerkskomponenten kommen. Vor allem die Lebensdauer der Stoßdämpfer wird dadurch erheblich reduziert. Da das Fahrzeug bei nicht angepasster Geschwindigkeit beim Überfahren einer Bodenschwelle teilweise den Bodenkontakt verliert, verlängert sich der Bremsweg eines dabei eingeleiteten oder bereits laufenden Bremsmanövers. Schlimmstenfalls kann das Fahrzeug sogar vollständig außer Kontrolle geraten.

### Offenbarung der Erfindung

Aufgabe der vorliegenden Erfindung ist es, ein verbessertes Verfahren bzw. Fahrerassistenzsystem der eingangs genannten Art zu schaffen, das den Fahrer weitergehend bei der Erkennung von Hindernissen für das Fahrzeug unterstützt und die Gefahr eines zu schnelles Überfahrens von Bodenschwellen mit den sich daraus ergebenden Folgen minimiert oder sogar vollständig vermeidet.

Diese Aufgabe wir durch ein Verfahren nach Anspruch 1 gelöst.

Die der vorliegenden Erfindung zugrunde liegende Idee besteht darin, dass ein erfasstes Hindernis mittels einer Auswertungseinheit daraufhin bewertet wird, ob es eine Bodenschwelle ist, und dass eine entsprechend Information an den Fahrer und/oder an Komponenten des Fahrzeugs nur dann ausgegeben wird, wenn ein erfasstes Objekt als Bodenschwelle erkannt worden ist.

Das erfindungsgemäße Verfahren gemäß Anspruch 1 weist gegenüber vorbekannten Verfahren und Systemen den Vorteil auf, dass der Fahrer bei der Erkennung von Bodenschwellen bzw. Speed-Humps wirkungsvoll unterstützt wird. Das Risiko, eine zur Begrenzung der Fahrzeuggeschwindigkeit in die Fahrbahn eingebaute Bodenschwelle zu übersehen, wird so deutlich reduziert. Folgeschäden aufgrund eines zu schnellen Überfahrens einer Bodenschwelle können dadurch vermieden oder zumindest erheblich reduziert werden, was insgesamt einer Erhöhung der Verkehrssicherheit zugute kommt.

Vorteilhafte Weiterbildungen und Verbesserungen des erfindungsgemäßen Verfahrens ergeben sich aus den abhängigen Ansprüchen.

So ist es besonders vorteilhaft, wenn die Ausgabe einer Information an den Fahrer und/oder an Komponenten des Fahrzeugs trotz einer erfassten Bodenschwelle unterdrückt wird, wenn die momentane Geschwindigkeit des Fahrzeugs geringer als eine vorgegebene Grenz- bzw. Höchstgeschwindigkeit ist, so dass die Gefahr eines zu schnellen Überfahrens der Bodenschwelle nicht gegeben ist, und/oder wenn der Fahrer bereits selbst einen Bremsvorgang des Fahrzeugs eingeleitet hat und die Geschwindigkeit des Fahrzeugs signifikant reduziert, so dass davon ausgegangen werden kann, dass der Fahrer eine kommende Bodenschwelle bereits erkannt und die nötigen Maßnahmen eingeleitet hat. Auf diese Weise werden unnötige Signale bzw. Informationen vermieden, so dass der Fahrer seine volle Aufmerksamkeit dem Verkehrsgeschehen widmen kann. Die Grenzgeschwindigkeit hängt von der Art des Fahrzeugs ab und kann beispielsweise bei 15 km/h liegen. Auch kann sie vom Fahrer etwa in Abhängigkeit von den üblichen Arten und Höhen von Bodenschwellen in dem momentan befahrenen Gebiet ausgewählt bzw. eingestellt werden.

Vorteilhafterweise kann die vorgegebene Höchstgeschwindigkeit auch von der Art, insbesondere von der Höhe einer erkannten Bodenschwelle abhängen. Dazu wird mindestens ein bestimmtes Merkmal, vorzugsweise die Höhe einer erfassten Bodenschwelle, mittels der Objekterfassungsmittel bestimmt, und die dem ermittelten Merkmal bzw. seinem Wert zugeordnete Höchst- oder Grenzgeschwindigkeit wird anhand einer Kennlinie oder eines mathematischen Zusammenhangs abgeleitet, die bzw. der vorzugsweise auf das jeweilige Fahrzeug abgestimmt ist.

Gemäß einer besonders bevorzugten Ausführungsform des erfindungsgemä-βen Verfahrens ist weiterhin vorgesehen, dass das Fahrzeug, insbesondere der Antrieb und/oder Bremsmittel des Fahrzeugs derart gesteuert oder geregelt wird, dass die Geschwindigkeit des Fahrzeugs automatisch reduziert wird, wenn die Bewertung eines erfassten Objekts ergibt, dass es sich dabei um eine als Speed-Hump errichtete Bodenschwelle handelt. Vorzugsweise wird das Fahrzeug dabei bis auf eine vorgegebene oder vorgebbare Höchstgeschwindigkeit abgebremst, die von der Art des Fahrzeugs und/oder in der vorangehend beschriebenen Weise von der Art, insbesondere der Höhe einer erkannten Bodenschwelle abhängen kann. Die Vorteile sind dabei insbesondere in einer weiteren Entlastung des Fahrers zu sehen, da er den Bremsvorgang nach der Erfassung einer Bodenschwelle nicht mehr selbst starten muss. Auch werden dadurch Zeitverzögerungen aufgrund der Reaktionszeit des Fahrers vermieden.

Eine bei Fahrzeugen mit aktivem Fahrwerk oder ähnlichen Einrichtungen einsetzbare besonders vorteilhafte Ausgestaltung des erfindungsgemäßen Verfahrens sieht vor, dass bei einer erfassten Bodenschwelle das aktive Fahrwerk des Fahrzeugs automatisch angepasst wird, um den kommenden "Hubbel" in der Fahrbahn optimal, d.h. mit möglichst geringen Beeinträchtigungen für das Fahrzeug und die Insassen überfahren zu können. Im Rahmen dieser Anpassung kann vorzugsweise die Bodenfreiheit des Fahrzeugs erhöht und/oder die Federung des Fahrzeugs weicher eingestellt werden. Vorteilhafterweise können die automatisch vorgenommen Anpassungen auch von der momentan gefahrenen Geschwindigkeit abhängen.

Besonders vorteilhaft ist es dabei ferner, wenn der Antrieb und/oder das aktive Fahrwerk des Fahrzeugs derart gesteuert wird, dass nach dem Passieren einer erfassten Bodenschwelle das Fahrzeug wieder beschleunigt wird und/oder das aktive Fahrwerk des Fahrzeugs wieder auf eine bodenschwellenfreie Strecke eingestellt wird, wobei vorzugsweise die vor der Erfassung der Bodenschwelle vorliegenden Betriebsparameter erneut eingestellt werden. So wird das Fahrzeug beispielsweise wieder bis zu der Geschwindigkeit beschleunigt, die unmittelbar vor der Einleitung einer automatischen Abbremsung gefahren wurde. Ebenso kann eine für das Überfahren einer erfassten Bodenschwelle automatisch vorgenommene Vorspannung eines aktiven Fahrwerks nach dem erfolgten Passieren der Bodenschwelle wieder rückgängig gemacht werden, um die Fahrt unter den vorherigen Bedingungen fortsetzen zu können. Vorteilhafterweise kann die automatische Rückstellung der Betriebsparameter nach dem Überfahren einer Bodenschwelle auch davon abhängig gemacht werden, dass der Fahrer zuvor ein entsprechendes Freigabesignal eingibt, was beispielsweise durch die Betätigung eines Tasters und/oder durch die Betätigung des Gaspedals erfolgen kann.

Wenn eine Bodenschwelle erfasst worden ist, kann eine Information für den Fahrer vorteilhafter Weise in der Form eines oder mehrerer Warnsignale erzeugt werden, welche vorzugsweise als optische und/oder akustische und/oder haptische Warnsignale abgegeben werden können. Für eine haptische Warnung sind Mensch-Maschine-Schnittstellen (HMI) nutzbar, die gegebenenfalls bereits im Rahmen eines Lane-Departure-Warning-Systems (LDW) im Fahrzeug vorhanden sind. Hierzu zählen beispielsweise Vibratoren im Lenkrad oder Sitz, durch die ein kurzer Warnimpuls erzeugbar ist.

Eine noch effizientere Warnung ist durch einen nach einer erfassten Bodenschwelle automatisch erzeigten, kurzen Bremsdruck möglich, wie er von so genannten PSS-Funktionen (Predictive-Safety-Systems) bekannt ist. Dieser kurze Bremsdruck führt dazu, dass der Fahrer selbst mit sehr kurzer Verzögerungszeit zu Bremsen beginnt.

Als optische Information können beispielsweise Warnleuchten in einem Kombiinstrument auf eine erfasste Bodenschwelle hinweisen. Besonders vorteilhaft ist es bei optischen Informationen jedoch, wenn bei einer erfassten Bodenschwelle ein Bild oder ein Symbol einer Bodenschwelle vorteilhafter Weise ortsrichtig in ein darstellendes Videosystem des Fahrzeugs, beispielsweise in ein Nachtsichtsystem (Night-Vision) eingeblendet wird. Vorzugsweise kann das Bild oder Symbol dabei noch durch eine Markierung, etwa durch einen roten Rahmen hervorgehoben werden.

Gemäß einer weiteren besonders bevorzugten Ausführungsform des erfindungsgemäßen Verfahrens wird vorgeschlagen, dass mindestens ein bestimmtes Merkmal einer erfassten Bodenschwelle ermittelt und mit einer vorgegebenen oder vorgebbaren Vergleichsgröße verglichen wird, und dass die Abgabe einer Information an den Fahrer und/oder an Komponenten des Fahrzeugs von dem Ergebnis dieses Vergleichs abhängt. So kann beispielsweise die Höhe einer erfassten Bodenschwelle ermittelt werden und eine entsprechende Information nur dann ausgegeben werden, wenn die Bodenschwelle eine vorher festgelegte Mindesthöhe erreicht oder übersteigt. Auf diese Weise können Warnsignale bei kleineren Bodenschwellen unterdrückt werden, so dass eine Verunsicherung oder Verärgerung des Fahrers aufgrund von unnötigerweise angezeigten Informationen zu ungefährlichen Bodenschwellen vermieden wird und die Akzeptanz eines das erfindungsgemäße Verfahren ausführenden Warn-Systems vergrößert wird.

Besonders vorteilhaft ist es ferner, wenn zumindest nach dem Überfahren einer erfassten Bodenschwelle das Vorhandensein des Bodenkontakts zumindest einer Achse des Fahrzeugs überwacht wird, und dass wenn eine oder beide Achsen des Fahrzeugs den Bodenkontakt verloren haben, ein vom Fahrer gegebenenfalls getätigter Bremsbefehl von einer Steuerungseinheit solange ignoriert wird und die Bremse solange gelöst bleibt, bis der Bodenkontakt an der mindestens einen Achse, vorzugsweise an allen Achsen des Fahrzeugs wieder hergestellt ist. Durch eine derartige erweiterte Automatikfunktion können größere Schäden vermieden werden, die dann auftreten könnten, wenn ein Fahrer nach dem zu schnellen Überfahren einer Bodenschwelle den Bodenkontakt kurzzeitig verliert und in dieser Zeit dann die Bremse betätigt, so dass die anschließende Landung mit blockierten Rädern erfolgt, was insbesondere für die Achsaufhängung zu einer maximalen Belastung führt.

Vorteilhafterweise können die zur Durchführung des erfindungsgemäßen Verfahrens verwendeten Objekterfassungsmittel durch Video-Sensoren und/oder Radar-Sensoren und/oder Lidar-Sensoren und/oder Laser-Sensoren und/oder Ultraschallsensoren gebildet werden. Bei der Detektion von Bodenschwellen mittels optischen Systemen wie Video-Kameras oder Bild-Sensoren kann vorteilhafter Weise berücksichtigt werden, dass Bodenschwellen meist mit einer durchgehenden weißen oder gelben Linie über den höchsten Teil der Bodenschwelle gekennzeichnet sind. Diese Linie einer Bodenschwelle hat im Unterschied zu anderen Linien, etwa zu einer Stopplinie meist eine andere Form, wobei sie beispielsweise gezackt verlaufen kann. Auch kann sie unterbrochen oder durchgehend ausgeführt sein. Eine Stopplinie ist oft schmäler und vor allem quer zur Fahrbahn orientiert.

Eine mit einem Video-Sensor erfasste Linie wird dann mit einem Bildverarbeitungsalgorithmus detektiert. Hierzu können prinzipiell ähnliche Algorithmen wie für die Spurkennung in einem Lane-Departure-Warning-System (LDW) verwendet werden, welche z. B. durch Grauwertdetektion Grauwertkanten detektieren. Diese Kanten stellen die Begrenzung der Linie einer Bodenschwelle dar. Die Suchrichtung ist allerdings gegenüber LDW genau orthogonal, d.h. die Suchrichtung ist in Spaltenrichtung bzw. in Richtung der Fahrbahn, die Bodenschwellen-Begrenzung läuft jedoch in etwa waagerecht bzw. quer zur Fahrbahn. Die so gefundenen Stützstellen werden dann über ein Schätzverfahren (z.B. Kalman- Filter) zu einer Bodenschwellen-Außenkontur fusioniert und dann mit vorgegebenen Templates (z.B. einer Zackenkontur) verglichen, um festzustellen, ob eine Bodenschwelle vorliegt oder nicht. Bei der Verwendung einer Farbkamera kann zusätzlich die Farbe der Bodenschwellen-Begrenzung als Erkennungskriterium verwendet werden.

Bei der Detektion mit Radar-Sensoren können sowohl Long-Range-Radar-Sensoren (LRR-Sensoren, beispielsweise mit 77 GHz arbeitend) als auch Short-Range-Radar-Sensoren (SRR-Sensoren), die beispielsweise auch als Stop-and-Go-Ergänzung für ACC-Systeme (Automatic-Cruise-Control) nutzbar sind, eingesetzt werden. Ferner können auch Lidar-Sensoren oder Lidar-Scanner eingesetzt werden, die ebenfalls für ACC-Systeme benutzt werden. Bodenschwellen werden dabei als sehr breites stationäres Hindernis mit eher mäßigem Radar-/Lidar-Rückstreuquerschnitt detektiert.

Auch mittels Ultraschallsensoren, die beispielsweise für Funktionen eines Parkpiloten verwendet werden, können Bodenschwellen als Hindernisse detektiert werden. Allerdings ist die Vorausschauweite mit maximal 5 m relativ stark begrenzt, so dass der Fahrer in vielen Fällen nicht mehr rechtzeitig auf die Warnung reagieren können wird.

Besonders vorteilhaft ist demgegenüber eine Kombination der vorgenannten Sensoren. Durch eine Kombination mehrerer Sensorprinzipien kann die Detektionssicherheit deutlich erhöht werden. So kann vorteilhafter Weise eine von einem LRR-Sensor detektierte Bodenschwelle durch einen Videosensor verifiziert werden.

Allgemein können alle Arten von Sensoren verwendet werden, die solche Hindernisse detektieren können, für die Merkmale zur Erkennung einer Bodenschwelle abgeleitet werden können.

Besonders vorteilhaft ist es ferner, wenn Informationen zu Positionen von bekannten Bodenschwellen in digitaler Form bereitgestellt werden und mittels einer Ortungsvorrichtung die aktuelle Position des Fahrzeugs bestimmt wird, wobei die digitalen Informationen in Kombination mit der aktuellen Fahrzeugposition zur Ermittlung von vor dem Fahrzeug befindlichen Bodenschwellen der Auswertungseinheit zugeführt werden. Wenn diese digitalen Daten, die insbesondere im Rahmen eines Navigationssystems vorliegen können, über Datenfusion mit den Daten der Objekterfassungsmittel kombiniert werden, so kann die Sicherheit und/oder die Genauigkeit bei der Detektion von Bodenschwellen noch weiter erhöht werden. Grundsätzlich ist es jedoch auch möglich, dass die Erfassung von Bodenschwellen und die damit verbundene Informationsabgabe an den Fahrer und/oder an Komponenten des Fahrzeugs alleine aufgrund der digitalen Daten in Kombination mit der aktuellen Fahrzeugposition vorgenommen wird. Dazu werden die Objekterfassungsmittel durch ein Navigationssystem gebildet, das einerseits Mittel zur Bestimmung der aktuellen Fahrzeugposition sowie andererseits als digitale Karte eine Datenbasis umfasst, die neben Informationen zu verschiedenen Objekten wie beispielsweise Verkehrszeichen oder Gebäuden auch Informationen zu bekannten Bodenschwellen einschließlich deren jeweiliger Position enthält. In Abhängigkeit von der aktuellen Position des Fahrzeugs werden dabei aus der digitalen Datenbasis die entsprechenden Informationen zu Positionen bekannter Bodenschwellen erfasst.

Die vorliegende Erfindung betrifft ferner ein System zur Unterstützung des Fahrers eines Fahrzeugs bei der Erkennung von Bodenschwellen, das zur Durchführung des erfindungsgemäßen Verfahrens geeignet ist.

Ein dem vorangehend beschriebenen Verfahren entsprechendes Fahrerassistenzsystem umfasst Objekterfassungsmittel zur Erfassung außerhalb eines Fahrzeugs befindlicher Objekte, eine Auswertungseinheit, durch die erfasste Objekte auf das Vorliegen bestimmter Merkmale auswertbar sind, sowie eine Steuerungs- oder Regelungseinheit zur Erzeugung von Informationen, die an den Fahrer und/oder an bestimmte Komponenten des Fahrzeugs, abgegeben werden können, wobei die Auswertungseinheit geeignet ist, erfasste Objekte auf Übereinstimmungen mit Bodenschwellen auszuwerten, und die Informationen für den Fahrer und/oder für die Komponenten des Fahrzeugs in Abhängigkeit von einem positiven Ergebnis dieser Auswertung abgegeben werden. Vorteilhafterweise können die Auswertungseinheit einerseits und die Steuerungs- oder Regelungseinheit andererseits auch zusammengefasst bzw. in einander integriert sein.

### Kurze Beschreibung der Zeichnung

In den Zeichnungen ist ein Ausführungsbeispiel der Erfindung dargestellt, das in der nachfolgenden Beschreibung näher erläutert wird. Die Zeichnungen zeigen:
- Figur 1:: eine schematische Darstellung eines mit einem erfindungsgemäßen System ausgerüsteten Fahrzeugs; und
- Figur 2:: schematische Darstellung des erfindungsgemäßen Systems. **Ausführungsform der Erfindung**

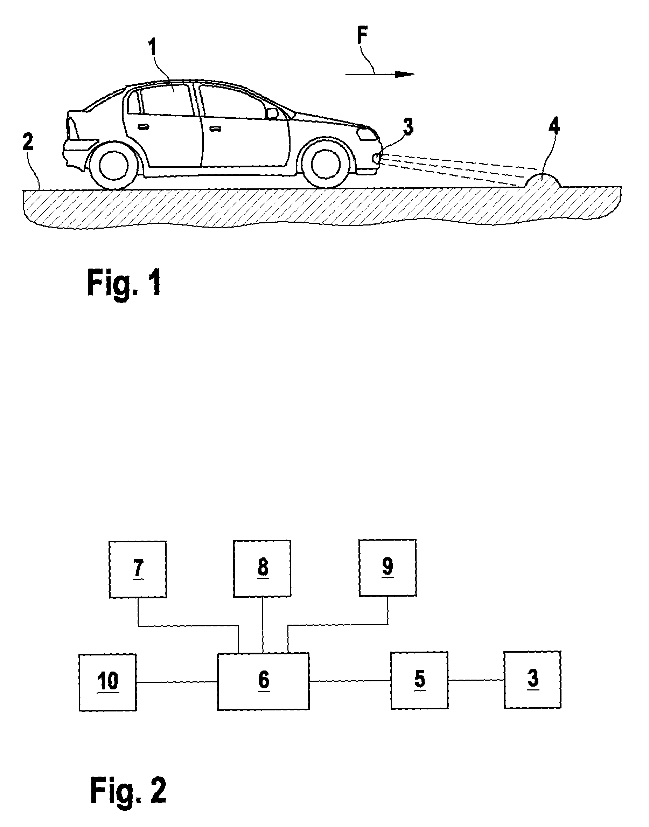

Das erfindungsgemäße Verfahren bzw. das erfindungsgemäße System findet insbesondere bei Kraftfahrzeugen Verwendung. In der Figur 1 ist ein Kraftfahrzeug 1 dargestellt, das sich auf einer Straße 2 in einer durch einen Pfeil dargestellten Fahrtrichtung F bewegt. Im vorderen Bereich des Kraftfahrzeugs 1 ist ein Sensor 3 zur Erfassung von Objekten angeordnet, die sich vor dem Kraftfahrzeug 1 auf der Straße 2 befinden. Bei dem Sensor 3 handelt es sich hier um einen Video-Sensor. Durch den Sensor 3 werden hier Bodenschwellen 4 erfasst, die zur gezielten Geschwindigkeitsreduzierung in die Straße 2 eingebaut sind (Figur 1).

Die von dem Sensor 3 erfassten Daten werden einer Auswertungseinheit 5 zugeführt, durch die beispielsweise mittels optischer Bildverarbeitungsalgorithmen ermittelt wird, ob es sich bei einem vom Sensor 3 erfassten Objekt zumindest mit einer überwiegenden Wahrscheinlichkeit um eine Bodenschwelle 4 handelt oder nicht.

Die Auswertungseinheit 5 ist mit einer Steuerungseinheit 6 verbunden, durch die in Abhängigkeit von dem durch die Auswertungseinheit 5 ermittelten Ergebnis ein optisches 7 und/oder akustisches 8 und/oder haptisches 9 Warnsignal-Erzeugungsmittel angesteuert wird, wenn ein erfasstes Objekt als Bodenschwelle 4 erkannt worden ist (Figur 2).

Auch können von der Steuerungseinheit 6 Informationen unmittelbar an bestimmte Komponenten 10 des Kraftfahrzeugs 1 gegeben werden, wenn eine Bodenschwelle 4 erfasst worden ist. Bei diesen Komponenten 10 kann es sich beispielsweise um Steuermittel für den Antrieb und/oder für die Bremsen des Kraftfahrzeugs 1 handeln, so dass bei einer erfassten Bodenschwelle 4 das Kraftfahrzeug 1 automatisch abgebremst werden kann. Wenn das Kraftfahrzeug 1 ein aktives Fahrwerk besitzt, können die von der Steuerungseinheit 6 ansteuerbaren Komponenten 10 auch Steuermittel des aktiven Fahrwerks sein, um dieses geeignet vorzuspannen bzw. auf das folgende Überfahren einer Bodenschwelle 4 einzustellen.

## Patentansprüche

1. Verfahren zur Unterstützung des Fahrers eines Fahrzeugs (1) bei der Erkennung von Hindernissen für das Fahrzeug (1), wobei das Verfahren mindestens die folgenden Schritte umfasst:
- außerhalb des Fahrzeugs (1) befindliche Objekte werden mittels Objekterfassungsmitteln (3) erfasst,
- bei erfassten Objekten wird eine Information (7, 8, 9) an den Fahrer und/oder an bestimmte Komponenten (10) des Fahrzeugs (1) gegeben,
**dadurch gekennzeichnet,**
**dass** mittels einer Auswertungseinheit (5) ermittelt wird, ob ein erfasstes Objekt eine Bodenschwelle (4) ist,
und **dass** eine Information (7, 8, 9) an den Fahrer und/oder an Komponenten (10) des Fahrzeugs (1) nur dann gegeben wird, wenn ein erfasstes Objekt eine Bodenschwelle (4) ist.

2. Verfahren nach Anspruch 1, **dadurch gekennzeichnet, dass** die Ausgabe einer Information (7, 8, 9) an den Fahrer und/oder an Komponenten (10) des Fahrzeugs (1) bei einer erfassten Bodenschwelle (4) unterdrückt wird, wenn die momentane Geschwindigkeit des Fahrzeugs (1) geringer als eine vorgegebene Höchstgeschwindigkeit ist und/oder wenn das Fahrzeug (1) auf Veranlassung des Fahrers abgebremst wird.

3. Verfahren nach Anspruch 1 oder 2, **dadurch gekennzeichnet, dass** bei einer erfassten Bodenschwelle (4) die Geschwindigkeit des Fahrzeugs (1) automatisch reduziert wird, wobei das Fahrzeug (1) vorzugsweise bis auf eine vorgegebene Höchstgeschwindigkeit abgebremst wird.

4. Verfahren nach Anspruch 2 oder 3, **dadurch gekennzeichnet, dass** mindestens ein bestimmtes Merkmal, insbesondere die Höhe einer erfassten Bodenschwelle (4) ermittelt wird, und dass die Höchstgeschwindigkeit von dem mindestens einen ermittelten Merkmal abhängt.

5. Verfahren nach einem der Ansprüche 1 bis 4, **dadurch ge** - **kennzeichnet** , dass bei einer erfassten Bodenschwelle (4) ein aktives Fahrwerk des Fahrzeugs (1) automatisch angepasst wird, wobei vorzugsweise die Bodenfreiheit des Fahrzeugs (1) erhöht und/oder die Federung weicher eingestellt werden.

6. Verfahren nach Anspruch 3 oder 5, insbesondere in Kombination mit Anspruch 4, **dadurch gekennzeichnet, dass** der Antrieb und/oder das aktive Fahrwerk des Fahrzeugs (1) derart gesteuert wird, dass nach dem Passieren einer erfassten Bodenschwelle (4) und insbesondere nach der Eingabe eines vom Fahrer einzugebenden Signals das Fahrzeug (1) wieder beschleunigt wird und/oder das aktive Fahrwerk des Fahrzeugs (1) wieder auf eine bodenschwellenfreie Strecke eingestellt wird, wobei vorzugsweise die vor der Erfassung der Bodenschwelle (4) vorliegenden Betriebsparameter erneut eingestellt werden.

7. Verfahren nach einem der vorangehenden Ansprüche, **dadurch gekennzeichnet , dass** bei einer erfassten Bodenschwelle (4) mindestens ein optisches (7) und/oder akustisches (8) und/oder haptisches (9) Warnsignal für den Fahrer erzeugt wird.

8. Verfahren nach einem der vorangehenden Ansprüche, **dadurch gekennzeichnet , dass** bei einer erfassten Bodenschwelle (4) ein automatischer Bremsruck erzeugt wird.

9. Verfahren nach einem der vorangehenden Ansprüche, **dadurch gekennzeichnet , dass** bei einer erfassten Bodenschwelle (4) ein Bild oder ein Symbol einer Bodenschwelle in ein darstellendes Videosystem des Fahrzeugs (1) eingeblendet wird, wobei das Bild oder Symbol vorzugsweise durch eine Markierung hervorgehoben wird.

10. Verfahren nach einem der vorangehenden Ansprüche, **dadurch gekennzeichnet, dass** mindestens ein bestimmtes Merkmal, insbesondere die Höhe einer erfassten Bodenschwelle (4) ermittelt wird, dass das ermittelte Merkmal mit einem Vergleichswert verglichen wird, und dass die an den Fahrer und/oder an Komponenten (10) des Fahrzeugs (1) ausgegebenen Informationen (7, 8, 9) von dem Vergleichsergebnis abhängen.

11. Verfahren nach einem der vorangehenden Ansprüche, **dadurch gekennzeichnet, dass** nach dem Überfahren einer erfassten Bodenschwelle (4) der Bodenkontakt des Fahrzeugs (1) überwacht wird, und dass bei Verlust des Bodenkontakts an mindestens einer Achse des Fahrzeugs (1) ein vom Fahrer gegebenenfalls getätigter Bremsbefehl solange nicht befolgt wird, bis der Bodenkontakt an der mindestens einen Achse, vorzugsweise an allen Achsen des Fahrzeugs (1) wieder hergestellt ist.

12. Verfahren nach einem der vorangehenden Ansprüche, **dadurch gekennzeichnet, dass** außerhalb des Fahrzeugs (1) befindliche Objekte mittels Video-Sensoren und/oder Radar-Sensoren und/oder Lidar-Sensoren und/oder Laser-Sensoren und/oder Ultraschallsensoren erfasst werden.

13. Verfahren nach einem der vorangehenden Ansprüche, **dadurch gekennzeichnet, dass** digitale Informationen zu Positionen bekannter Bodenschwellen (4) bereitgestellt werden, und dass mittels einer Ortungsvorrichtung die aktuelle Position des Fahrzeugs (1) bestimmt wird, wobei die digitalen Informationen in Kombination mit der aktuellen Fahrzeugposition der Auswertungseinheit (5) zugeführt werden.

14. Fahrerassistenzsystem zur Durchführung des Verfahrens nach einem der vorherigen Ansprüche, umfassend Objekterfassungsmittel (3) zur Erfassung außerhalb eines Fahrzeugs (1) befindlicher Objekte, eine Auswertungseinheit (5), durch die erfasste Objekte auf das Vorliegen bestimmter Merkmale auswertbar sind, sowie eine Steuerungs- oder Regelungseinheit (6) zur Erzeugung von an den Fahrer und/oder an bestimmte Komponenten (10) des Fahrzeugs (1) abgebbarer Informationen, **dadurch gekennzeichnet, dass** die Auswertungseinheit (5) geeignet ist, erfasste Objekte auf Übereinstimmungen mit Bodenschwellen (4) auszuwerten, und dass die Informationen (7, 8, 9) für den Fahrer und/oder für die Komponenten (10) des Fahrzeugs (1) in Abhängigkeit von einem positiven Ergebnis dieser Auswertung erzeugbar sind.
